# EUROPEAN PATENT APPLICATION

(11) **EP 3 657 357 A1**
(43) Date of publication of application: **27.05.2020**
(21) Application number: 18020616.1
(22) Date of filing: 22.11.2018
(51) Int. Cl.: G06F 16/9537, H04W 4/02, G06F 16/29, G06Q 10/08

(54) **CUSTOMIZABLE SYSTEM OF TEMPORAL 3D GEOLOCATION INTEGRATED WITH THE COMBINED DETERMINATION OF POSITION, PRESENCE AND IDENTITY OF THE PERSON**

(71) Applicant: Cavaliere Gianluca Abitat Sistemi Informativi Territoriali Srl, 36026 Pojana Maggiore (VI) (IT)
(72) Inventor: Cavaliere Gianluca Abitat Sistemi Informativi Territoriali Srl, 36026 Pojana Maggiore (VI) (IT)

(57) **Abstract**

The customizable system of geolocation subject of this invention allows to associate to the usual geographic coordinates detected with known devices (for example GPS, Galileo or similar) relative to a specific person or object, some additional information useful to identify with more precision and less downtime the addressee.

In particular the registered user, after the download of the specific application, called "WAY.LINK", can associate to the system of coordinates inserted corresponding to a specific destination (phase (7)) one or more advanced functions, the most important of which is the "Time Limit Interval" (("Factor 1" - phases (13), (14), (15) and (16) - Fig. 1), which is the opportunity to associate to such coordinates one or more intervals of temporal validity, that indicate for the User the temporal intervals within the coordinates are valid.

By using this function it is possible for example, for an express courier, not only to reach the specific destination, but also to know the interval of time (time - date) or the intervals of time (time - date) the addressee is reachable (advanced functionality "Factor 2" - phase (17) - Fig. 1)). The system is furthermore able to provide, besides the pre-determined interval of time, the distance of the user from the indicated point. These functions (Factor 1 and 2) for Privacy issues need that the Addressee gives his permission, directly to the express courier, to use his data (otherwise the delivery will be made through the usual methods).

These functions, along with the others described in this patent, allow to associate to each user a string of information (called "GeoLink") that improves substantially the identification of a given addressee, reducing for example the downtime of a courier, with subsequent save of time and money.

The application "WAY.LINK" is easily downloadable through the common Platforms available online (for example "Google Play Store ®" or "Apple Store ®").

## Description

### Field of application of the invention

The invention relates to the sector of geolocation, integrated with techniques of digital identification.

### State-of-the-art

Geolocation is the identification of the geographical position in the real world of a given object, as for example a mobile phone or a computer, connected or not to the Internet, according to different techniques, the most common is the GPS (Global Position System) localization system, based on radio signals obtained from artificial satellites in orbit around the Earth.

Since July 2018 the European system of positioning "Galileo" is also active; its satellites (currently 26) are able, unlike the other systems of geolocation and security, to answer to the vehicle that sent the emergency request with the information that the signal was received by rescues and that they are on the way.

According to the purpose of its creators, once it reaches the maximum efficiency, the system "Galileo" will be more accurate (of approximately 4 times) than the GPS system.

The main problem related to such systems of geolocation is that the address of the location to reach is an "aseptic" data, that does not take into account for example the extension of the building (or even the complex of buildings), that is situated near a given address (for example Public Entities, Schools-Universities or Centers of Research); in this regard it seems very difficult, for example for an express courier, who has to deliver a parcel purchased by a client, to find a specific person within a very large area, resulting in a loss of time (and an financial loss).

Another problem related to such systems of geolocation is the time, or more specifically the coincidence in time of the delivery-receipt event. Indeed, often it happens that, once reached the destination, the express courier does not find the addressee because this is temporarily absent from his domicile.

So there is the need to integrate the actual systems of geolocation with computer tools (algorithms, portals, etc.) that allow to make more usable the collected data, developing them in order to reach the destination more easily and more quickly.

At patent level there are different documents that face (or try to solve) such problem, among them are mentioned, for example, the following:
- International patent n. WO2011045742, deposited on 12 December 2010 in the name of WAYTAG PROPRIETARY LTD (ZA) and others. In this document (Title: "A locating system and a method for operating a locating system") the geolocation data (GPS position) are integrated, through a user-interface manageable by smartphone or PC, with data related to users to reach, as telephone number, details on the mailbox used, various delivery addresses (in preferential order), clubs, places of interest, parking areas, or a particular sector of the company where he works.
   The system works in a bi-directional way, where both parts (sender and recipient) must be registered and identified through a Portal.
   Such system shows features similar to the subject of this invention, however has some objective limits related mainly to the fact that it does not solve the problem of the coincidence in time of the event delivery-receipt; the authentication system seems to be also too much elaborated and difficult to implement for users who are not experts of advanced computer tools.
- International Patent n. WO2007050884, deposited on 26 October 2006 in the name of ANDERSON TERRY PAUL (US) and SHARP GREGORY JAY (CA). In this document (Title: "Method and system for granting access to personal information") is described a system and method to permit users to have personal unique identifiers associated with personal information stored on a database accessed by an identity server;
   Users can share the personal unique identifier to third parties who can obtain the personal information then by accessing the server through the network. The peculiarity of the proposed system lies in the fact that the single user can modify (or better update) the data of his own profile and such modifications are immediately visible by the connected users.
   The described identification system is similar to that of the patent object of invention, since this is a system now widely spread and used; however it is not mentioned the possibility to apply it to the systems of geolocation, and this represents certainly one of the innovative aspects of this invention.

### Summary of the invention

The customizable system of 3D geolocation object of Invention, for brevity named "WAY.LINK" (which is the acronym of the English words **W**here **A**re **Y**ou **LINK**), allows a user to associate a personalized name (called "GeoLink") to a place identified by a 3D spatial coordinate (latitude, longitude, elevation) of all the World. The "GeoLink" can be associated with a static coordinate or a dynamic coordinate (for example public transportation in motion), or can be associated with more coordinates. In all the cases, the coordinates can be associated with more time limit intervals. Even "GeoLink" itself can be associated with a time limit validity-visibility.

The "GeoLink" can be converted into coordinates of geolocation only and exclusively by the people who directly received the "GeoLink". "GeoLink" can be associated with the coordinates in every spatial reference system, coordinates that can be outdoor (real World) or indoor (for example inside a building).

The precision of the coordinates associated with "GeoLink" through GPS devices are defined by the performances of the device which receives and then determines the coordinates. "WAY.LINK" system stores the coordinates associated with "GeoLink" and then permits to show over time the position of the entity associated with "GeoLink" itself.

The "GeoLink" "Mobile" type is the "GeoLink" associated with the user's mobile device (or devices). Through an algorithm of spatial analysis,"WAY.LINK", checks the presence of the user near his "GeoLink" and makes available a secure web service to give evidence of it, by integrating consolidated methods of identity verification.

A "GeoLink", to be valid, may be subjected to three step of evaluation:
1) Identity validation: means that to be valid the owner must be in a predetermined range of distance;
2) Time limit interval: means that to be valid, the temporal rules set by the owner (that is in what range of time the owner is traceable) must be satisfied;
3) Authorised users: means that to be valid, the user of "GeoLink" must be inside the category of the qualified users

"WAY.LINK" system creates a unique identifier then with position-identity-time interval-authorised users, that can be exposed as web service and used by other platforms to integrate and optimize the services offered by various companies.

The main innovative aspect of this invention is represented by the exposure of a code (through a web service) that integrates position of the entity, identity of the entity, time interval validity and users qualified to the consultation of the code itself.

The resulting code derives from the combination of existing and consolidated technologies, but the simultaneous presence of all the cited factors makes possible to realize an absolutely innovative system, that significantly improves the performances and the results of the systems present to the State of the Art.

### Drawings Description

- Figure 1 shows the flow chart of the process of activation of the "WAY.LINK" service, from the first access to the portal to the creation of the "GeoLink";
- Figure 2 shows, through a flow chart, an example where the User of the "WAY.LINK" service is an Express Courier.
- Figure 3 shows a short flow chart referred to the activation process of the "WAY.LINK" service through Mobile APP;
- Figure 4 shows the flow chart referred to an example including all the four validation factors, that is the delivery by an express courier through the "WAY.LINK" system.

### Detailed description of the invention

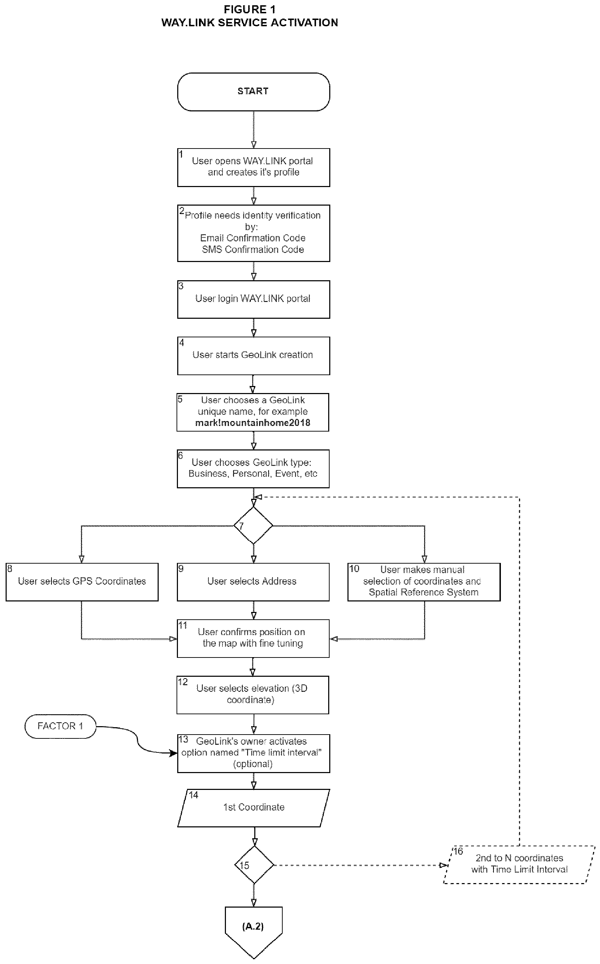

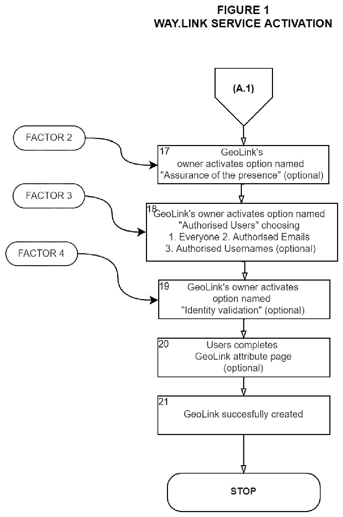

Fig.1 represents the process of activation of the customizable system of 3D temporal geolocation ("WAY.LINK") subject of the present invention, in which the various phases of the flow chart are highlighted with the following progressive numbers:
(1) - User Profile Creation: the user opens the "WAY.LINK" portal, he enters in the registration page and creates its own profile, indicating his Name, Surname, Email and Password;
(2) - User identity verification: for the identity verification the system sends a confirmation email to the address indicated by the user, which then selects the link on the email to validate the email address; further, the system asks the mobile phone number of the user and sends a confirmation code via SMS to this number; then the user inserts the confirmation code into the portal to complete the identity verification;
(3) - WAY.LINK Portal Login: the user logins into the "WAY.LINK" Portal, inserting the email and the password specified during the creation of the profile;
(4) - "GeoLink" access: the user enters in the creation page of the "GeoLink";
(5) - "GeoLink" creation: the string of the "GeoLink" requires the use of the exclamation point "!" and is an alphanumeric!alphanumeric type. (e.g.: mark!mountainhome2018);
(6) - GeoLink type choice: the user chooses between various available types of "GeoLink" (Business, Personal, Event, etc.);
(7) - First GeoLink coordinate choice: the user chooses between the following types of available "GeoLink" research coordinates;
(8) - GPS Coordinates: it is the first option available for the user; this option is selectable only in the event in which the "GeoLink" creation takes place through mobile devices, for example Smartphone, equipped with a system of GPS detection and receipt; in this case the system transposes the GPS coordinates, visualizes them in the map and allows the user to fine tuning the precision, by manually moving the map (phase (11) - Precision Positioning);
(9) - Address: in this case (second option) the user enters a string like "Address with House Number, City" and after the visualization over the map, system allows the user to adjust the precision by manually moving the map (phase (11) - Precision Positioning);
(10) - Manual selection of the coordinates: in this case (third option) the user manually enters the coordinates and the relative coordinate systems (Spatial Reference) according to the EPSG encoding (EPSG Geodetic Parameter Dataset is a online structured dataset of Coordinate Reference Systems and Coordinate Transformations).The input of the classic Latitude and Longitude are automatically assigned to the system EPSG:4326 (WGS84) and, after the map visualization, the system allows the user to fine tune the precision by manually moving the map (phase (11) - Precision Positioning);
(12) - Input the elevation: the system asks the input of the elevation (meters above sea level) in an optional way to identify the 3D component of the coordinate. At this point the user chooses whether to set up the four factors that mark the "WAY.LINK" portal to access the advanced features:
• (**Factor 1**) Time Limit Interval ((13)): if enabled, allows the user to specify the period in which the primary chosen coordinate (14) is valid, indicating start date and end date, among this period indicating the days of the week and for each day the start time and end time.
If a Time Limit Interval is enabled, it is possible to associate to the "GeoLink" (transitional phase (15)) two, three or more additional coordinates (16), indicating for each of them the time limit interval. In this case the cycle formed with the selection of the coordinates (phases (8), (9) and (10)), with the precision positioning (phase (11)) and with the elevation (phase (12)) is repeated N times, as described in the example below:

**Table 1 - Example of the primary and additional coordinates, with relating time limit interval**

| **GeoLink Name** | **Coordinates 1** | **Time Limit Interval 1** | **Coordinates 2** | **Time Limit Interval 2** | **Coordinates 3** | **Time Limit Interval 3** | **Date Limit Interval** |
|---|---|---|---|---|---|---|---|
| mark!courier | X1,Y1,Z1 | From Monday to Thursday, from 13.00 to 14.30 | X2,Y2,Z2 | From Monday to Thursday, from 9.00 to 12.30 and from 15.00 to 18.00 | X3.Y3.Z3 | Friday from 9.00 to 18.00 | From 20/08/2018 to 25/08/2018 |
| mark!mobile | Xm,Ym,Zm (variable) | | | | | | From 20/08/2018 to 24/08/2018 |

• (**Factor 2**) Assurance of the presence ((17)): if enabled, it allows the user of the "GeoLink" to know if the owner of the "GeoLink" is located in the position indicated in the "GeoLink" itself, within a range of 200 meters; for example an authorised express courier could know if the addressee of a delivery is at home in a given moment
• (**Factor 3**) Activation of the "Authorised Users" option ((18)): if enabled, it allows to specify the privacy level for the "GeoLink", "Everyone" means a public "GeoLink" (that is visible to anyone), for example the Business Companies that want to be found with precision. "Authorised Emails" and "Authorised Username" are used to specify which users can use the "GeoLink".
• (**Factor 4**) Activation of the "Identity validation" option ((19)): if enabled, it allows to meet another person also registered on "WAY.LINK", and to certify that the two persons met in a defined position and in a defined time, for example in the event of an express courier that has to certify the delivery of an important shipment.
(20) - Completion of the information page (optional): after the step (from (1) to (19)) so far described, the user may complete the information page of the "GeoLink" by including:
• The associated address;
• A telephone number;
• Parking information (with related "GeoLink");
• Additional notes, to indicate some useful information to the users.
(21) - Confirmation of the creation of a correct "GeoLink": if the "GeoLink" has been correctly created, a confirm is given, through an explicative text like "GeoLink correctly created and valid".

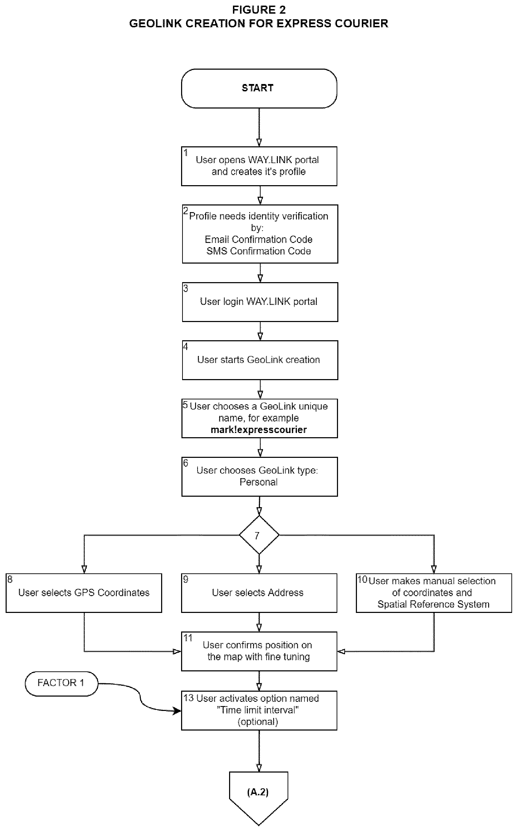

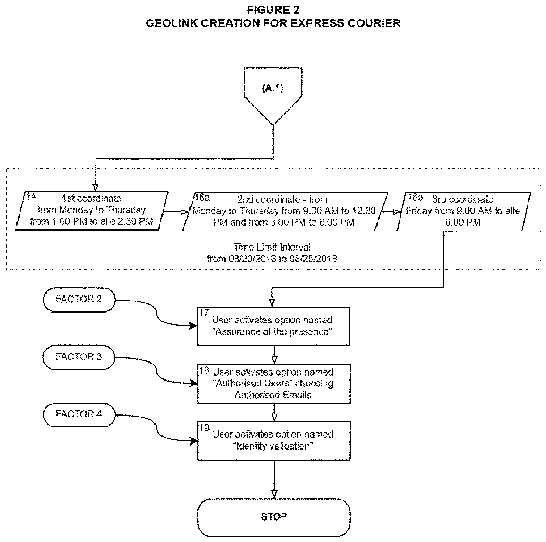

In Figure 2 is explained an application example related to the event in which the User of the "GeoLink" service is an express courier, that is the professional figure that may be the most advantaged by the use of the suggested system. The only differences with the generic flow chart of figure 1 are the followings:
- Phase (12) (insertion of the elevation, that is optional) is not reported;
- Once the "time limit interval" option is activated (phase (13)) the owner of GeoLink can specify more coordinates, each of them relating to a determined times (intervals) of delivery ((14) - first coordinate; (16a) - second coordinate; (16b) - third coordinate
- Final phases (20) (Completion of the information page) and (21) (Confirm of the correct creation of the "GeoLink") are not reported

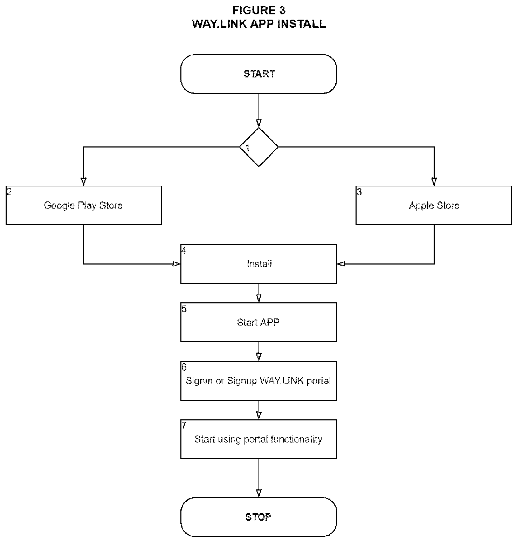

The user that wants to access the personalized system of geolocation Object of the present invention, as explained in Figure 3 (installation of the application "WAY.LINK") can download the application ("WAY.LINK") on his Smartphone, on a portable PC or on other similar devices, through the use of different operating platforms, as "Google Play Store ®" (a) or "Apple Store ®" (b); The user downloads the application and installs it on the chosen device (phase (c)); then he starts the application (phase (d)) and does the registration or, if he is already registered, it will insert the Login data (phase (e)). After the login, the user will be able to take advantage of all the possibilities of the "WAY.LINK" portal (phase (f)).

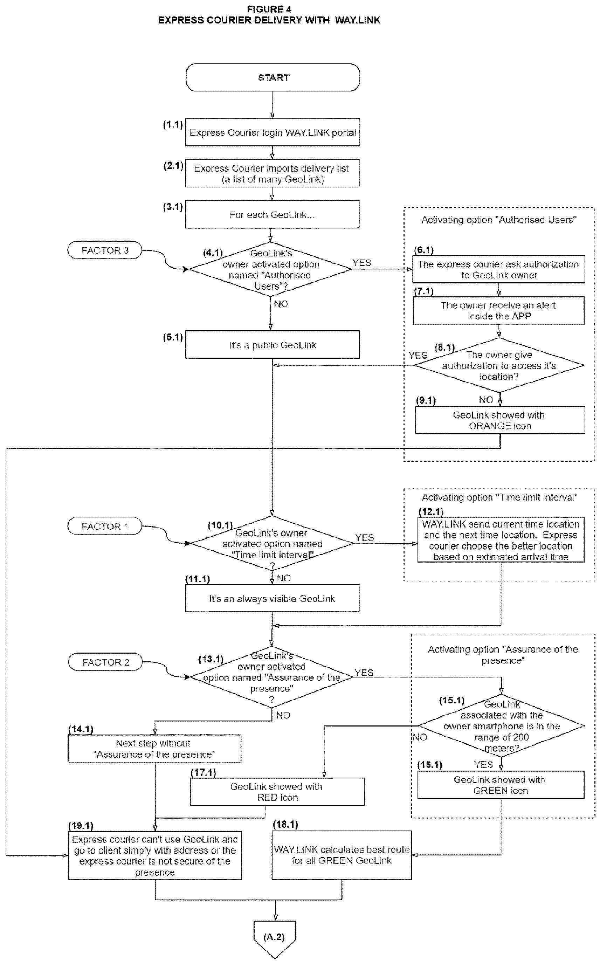

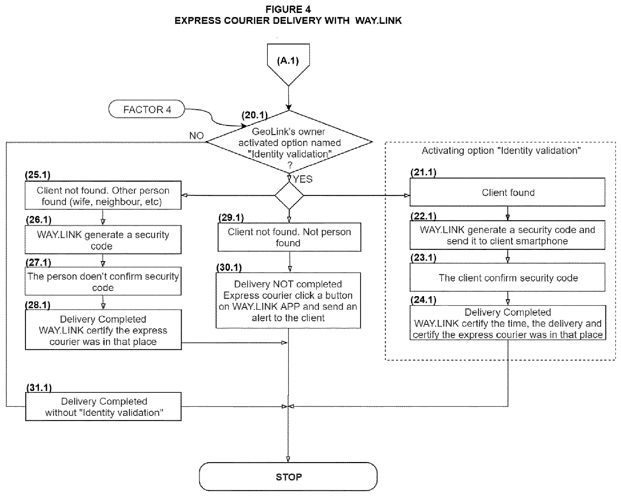

Figure 4 shows the step of the delivery from an express courier to a specific user. When the user makes an online purchase insert in the address the GeoLink name (if the portal accepts it) or in the notes field or in another field. In this way the "GeoLink" is sent to the Company that will take care of the delivery with GeoLink and with traditional address. The courier login "WAY.LINK" portal (1.1) and sets the list of the daily deliveries (2.2), that is a list of "GeoLink" that he directly receives from the Delivery Office of his Company. For every "GeoLink" (3.1) the "WAY.LINK" portal visualizes the state of the "GeoLink" with a range of colors, to allow the express courier the choice of better destinations and the relating optimized route to reach them. First, the portal verifies if the owner activated the Factor 3 "Authorised Users" (4.1); if not enabled, and so it is a public "GeoLink" (5.1), the system proceeds with the next verification (10.1); if enabled (and the courier is not yet in the list of the authorised users) the courier must require the authorization to the owner of the "GeoLink" (6.1) to be able to read the coordinate contained in it. A specific function on the portal allows to ask the authorization to the owner, who receives a notification (7.1). The request is for example: *"Good morning Mr. Rossi, I am the courier that has to deliver the order "Amazon*®*" Nr. 12345 dated dd*/*mm*/*yyyy. I kindly ask to be enabled to read your "GeoLink";* if the owner accepts the notification (8.1) then the "WAY.LINK" user related to the courier becomes part of the authorised users and the system proceeds to the next verification (10.1); otherwise the "GeoLink" is displayed with the colour ORANGE (9.1).

In the next step the portal verifies if the owner activated the Factor 1 - "Time Limit Interval" (10.1); if not enabled, and so the "GeoLink" is always active, (11.1), the system proceeds with the next verification (13.1), if otherwise the owner has enabled "Time Limit Interval" then "WAY.LINK" answers with the current position and the following one, with relative indications of start and end time (12.1). According to the time of the expected arrival time the courier decides where to go.

In the next step the portal verifies if the owner activated the Factor 2 - "Assurance of the presence" (13.1); if not enabled (14.1) the system proceeds with the following step (19.1); if enabled the system verifies if the "GeoLink" associated to the mobile device of the user is within 200 meters (15.1). In this case the "GeoLink" is visualized by the APP with the GREEN colour (16.1), otherwise with the RED colour (17.1). At this point the courier has a summing table with all the colours of the "GeoLink" which are:
- GREEN - if the courier is enabled to access the "GeoLink" and the courier is within the time limit interval and the "GeoLink" associated to the mobile device of the user is within 200 meters;
- RED - if the courier is enabled to access the "GeoLink" and the courier is within the interval of temporal validity and the "GeoLink" associated with the mobile device of the user is NOT within 200 meters;
- ORANGE - if the courier is NOT enabled to access the "GeoLink".

If the express courier is enabled to access the "GeoLink" but is not yet in the time limit interval (because, for example, it's early), there could be another color, YELLOW (that means "wait"). The system calculates the best route (18.1) for all the GREEN "GeoLink" and reaches, with high precision, the coordinate defined by the user for the delivery.

Then the portal verifies if the owner activated the Factor 4 - "Person Identity Verification" (20.1); If not enabled the courier proceeds with the delivery without identity verification (31.1), i.e. with the traditional method. If enabled, the following cases may occur:
1. The owner of the "GeoLink" found (21.1). In this case the APP of the courier creates an unique code and sends it to the Smartphone of the user (22.2), that after the confirmation receives the package. "WAY.LINK" saves the confirmation of the exact location and the time (24.1);
2. The owner of the "GeoLink" is not found, but other person is found (25.1) (wife, neighbour, ...). In this case the "WAY.LINK" APP generates an unique code (26.1), and the person does not confirm the code (27.1). The delivery anyway occurs and the "WAY.LINK" memorizes the confirmation of the exact location and time (28.1).
3. The owner of the "GeoLink" is not found and nobody else is found(29.1), so the delivery does not occur (30.1); the courier clicks the "alert" button on the "WAY.LINK" APP and uploads on the profile of the person the alert that the courier came at the time (....) and did not find anyone.

## Claims

1. Customizable system of geolocation, downloadable through an appropriate software application and usable on mobile devices, on PC or on other similar devices of communication, consisting in the following step:
• User Profile creation (phase (1)) in the appropriate dedicated portal;
• User identity verification (phase (2));
• Login (phase (3));
• Association of a personalized string to the User (phases (4) access, and (5), association), this string can be referred to a Company, a person or an event;
• Insertion of one (or more) coordinates, or reference addresses (phase (7)),
• **Characterised by the fact that** to each of such one (or more) coordinates, or reference addresses (phase (7)) are associated one (or more) of the following advanced modalities:
• Time limit interval ("Factor 1" - phases (13), (14), (15) and (16)), is the association to each coordinate (or more coordinates) of one (or more) time limit interval validity, with the purpose to indicate to the User the intervals of time within one (or more) coordinates, or addresses, are valid;
• Assurance of the presence (Factor 2 - phase (17)), that allows the user to know if the owner of one (or more) of the coordinates (phase (17)) is physically in the indicated position;
• Authorised Users (Factor 3 - phase (18)), that allows the owner to specify the Privacy level for one (or more) coordinates (phase (7));
• Identity validation (Factor 4 - phase (19)), that allows the user registered on the appropriate portal to meet another user, also registered, and to certify whether such two users met in a well defined position and time, for example when an express courier has a delivery to a determined addressee.

2. Customizable system of geolocation, according to claim 1, **characterized by the fact that** the advanced modalities Assurance of the presence is to establish, by the system of geolocation, whether the person/object linked to a determined system of coordinates is placed at a distance, from the point indicated by the coordinates, between 0 meters and 1500 meters or within an interval customizable by the user.

3. Customizable system of geolocation, according to claim 1 and 2, **characterized by the fact that** the distance of the person / object from the point indicated by one or more coordinates is, preferably, less than 200 meters.

4. Customizable system of geolocation, according to claim 1, 2 and 3, **characterized by the fact that**, if the user is an express courier that has a delivery to a specific system of coordinates (phase (7)), related to a given geographical position, such coordinates, being associated to one (or more) time limit intervals (Factor 1 - phases (13), (14), (15) and (16)) and inside a pre-determined distance from the point of delivery (Factor 2 - phase (17)), each of one or more coordinates is visualized on the mobile device with the following colours:
• GREEN (phase (16.1) - Fig.4), if the express courier is authorized to access the coordinates of the addressee, finds himself within the relating time limit interval and the addressee is within a pre-determined distance from the position indicated by the coordinates;
• RED (phase (17.1) - Fig.4), if the express courier is authorized to access the coordinates of the addressee, finds himself within the relating time limit interval but the addressee is more than a determined distance from the position indicated by the coordinates;
• ORANGE (phase 19.1 - Fig.4), if the express courier is not authorized to access the coordinates of the addressee;
• YELLOW, if the express courier is authorized to access the coordinates of the addressee, the addressee is within a determined distance from the position indicated by the coordinates, but the express courier is not within the pre-determined time limit interval.

5. Customizable system of geolocation, according to claim 1, **characterized by the fact that,** together with one or more of the advanced modalities "Factor 1", "Factor 2", "Factor 3" and "Factor 4", have also the elevation (phase (12)), with the purpose to identify the tridimensional component (height) of the one or more inserted coordinates (phase (7)).

6. Customizable system of geolocation, **characterized by the fact that,** after the choice of one or more of the advanced modalities "Factor 1", "Factor 2", "Factor 3" and "Factor 4", the user may optionally complete the information page relating to his profile by inserting (phase (20)) the following data:
• The Address;
• A telephone number;
• Parking information (with relating coordinates);
• Additional notes, to indicate to the users some useful information.
